# EUROPÄISCHE PATENTSCHRIFT

(11) **EP 0 254 197 B1**
(45) Veröffentlichungstag und Bekanntmachung des Hinweises auf die Patenterteilung: **03.02.1993**
(21) Anmeldenummer: 87110208.3
(22) Anmeldetag: 15.07.1987
(51) Int. Cl.: G01S 17/74, G01S 13/78

(54) **Einrichtung zur Freund-Feind-Identifikation**
Friend or foe identification device
Dispositif d'identification d'ami-d'ennemi

(30) Priorität: 17.07.1986 DE 3624143
(43) Veröffentlichungstag der Anmeldung: 27.01.1988
(73) Patentinhaber: Alcatel SEL Aktiengesellschaft, D-70435 Stuttgart (DE)
(72) Erfinder: Roth, Dieter, Dr., D-7530 Pforzheim (DE)
(74) Vertreter: Graf, Georg Hugo, Dipl.-Ing.

(56) Entgegenhaltungen:
- EP-A- 0 108 643
- EP-A- 0 187 086
- DE-A- 2 215 463
- DE-A- 2 251 295
- US-A- 2 831 185

## Beschreibung

Die Erfindung bezieht sich auf eine Einrichtung zur Freund-Feind-Identifikation (IFF). Derartige Einrichtungen sind bekannt.

So ist beispielsweise aus der DE-AS 20 05 457 ein IFF-System bekannt, das nach dem Funk-Rückstrahlprinzip (insbesondere Sekundärradar) arbeitet.

Aus der DE-PS 29 39 959 ist ein IFF-System bekannt, das mit codierten Lichtsignalen arbeitet.

Aus der DE-OS 22 51 295 und der EP-A 0 187086 sind Einrichtungen zur Freund-Feind-Identifikation bekannt, bei denen der Abfrager codierte Lichtsignale aussendet und der Abgefragte mit codierten Funksignalen antwortet.

Derartige Systeme erfordern einen erheblichen Aufwand. Es liegt daher der Erfindung die Aufgabe zugrunde, ein kostengünstiges IFF-System zu schafffen.

Die Lösung dieser Aufgabe erfolgt mit den im Anspruch 1 angegebenen Mitteln. Vorteilhafte Weiterbildungen sind in den Unteransprüchen enthalten.

Die Erfindung hat den Vorteil, daß mit einer Mehrfachausnützung von sowieso in einem Waffensystem vorhandenen elektronischen und optischen Geräten nicht nur eine erhebliche Kostenreduzierung sondern auch Vorteile hinsichtlich platzbedarf und Logistik verbunden sind.

Die Erfindung wird nachstehend anhand eines Ausführungsbeispiels erläutert. Es zeigt:

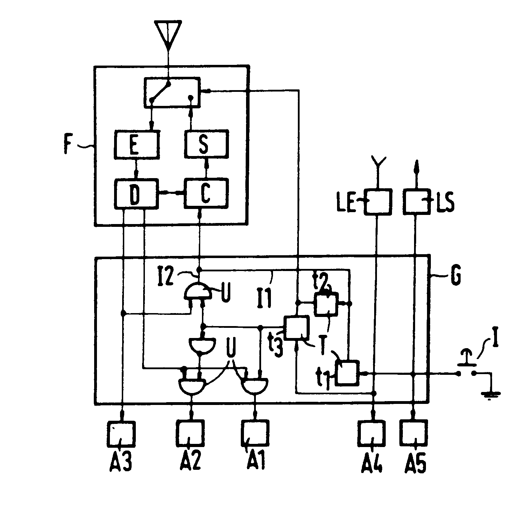

- Fig. 1: ein Prinzipschaltbild der neuen IFF-Einrichtung.

Gemäß Fig. 1 enthält die IFF-Einrichtung ein Funkgerät F mit einem Sendeteil S, einem Empfangsteil E einem Codierer C und einem Decodierer D. Sie enthält ferner einen in einem Waffensystem vorhandenen Laser-Entfernungsmesser LS und einen Laserwarnempfänger LE, ein Steuergerät G und

Anzeigen A1 - A5, die mit dem Steuergerät G baulich vereinigt sein können. Das Steuergerät G enthält eine Steuerschaltung von der nur die für das Verständnis des Funktionsprinzips notwendigen Bauelemente nämlich Und-Glieder U und eine Invertierstufe zum Ansteuern der Anzeigen A1 - A5 und drei Verzögerungsglieder T in Fig. 1 dargestellt sind. Mit dem Steuergerät G ist ein Auslöser I verbunden.

Die Funkübertragung von Abfrage- und Antwortsignalen muß gewisse Forderungen hinsichtlich übertragungs-, Nachrichten- und Täuschsicherheit sowie Störresistenz erfüllen. Ein geeignetes übertragungsverfahren ist beispielsweise das Frequenzsprungverfahren.

Die Identifikations-Entscheidung wird dadurch gewonnen, daß mit dem Vorgang der Entfernungsmessung im Codierer C erzeugte, elektronische Abfragesignale ausgesendet werden. Die Auslösung dieser beispielsweise täglich neu zu vereinbarenden Abfragesignale erfolgt durch den Auslöser I. Mit der Auslösung dieser Abfragesignale erscheint zugleich die Anzeige "Durchführung Identifikation" A5.

Sowie der Übertragungsvorgang für das Abfragesignal abgeschlossen ist, schaltet die Steuerungsschaltung des Steuergerätes G das Funkgerät der Abfragestation von Senden auf Empfang um und erwartet nun, daß auf das zeitlich kurz nach dem Laserimpuls per Funk im Frequenzsprungverfahren ausgesendete Abfragesignal das vereinbarte Antwortsignal folgt.

Wenn der Laserwarnempfänger LE der Antwortstation den Empfang eines Laserimpulses aus irgendeiner Richtung gemeldet hat (optisch omnidirektionale "Antenne") erscheint die Anzeige "Laseranstrahlung" A4. Gleichzeitig wird mit dem Empfang eines Laserimpulses durch den Lichtempfänger in jedem Falle der Empfänger E des Funkgerätes F der Antwortstation in einen Zustand gesteuert, in dem es möglich ist, die Abfragesignale zu empfangen und auszuwerten. Ist das Ergebnis der Auswertung im Decodierer D mit dem in diesem Zeitbereich gültigen Code positiv, d. h. ist erkannt worden, daß es sich um vereinbarte Abfragesignale handelt, so wird innerhalb kürzester Zeit das Funkgerät der Antwortstation von Empfang auf Senden umgeschaltet. Die verlangten Antwortsignale werden vom Codierer C des Funkgerätes elektronisch erzeugt und ebenfalls im Frequenzsprungverfahren zur Abfragestation übertragen. Mit dem Ende der Übertragung der Antwortsignale wird das Warnsignal "Laseranstrahlung" gelöscht.

Die auf die Abfragesignale erwarteten Antwortsignale treffen nun in der Abfragestation beim Empfänger des Funkgerätes ein. Da er schon auf den Empfang dieser Signale vorbereitet ist, können sie mit minimalem Zeitverzug ausgewertet werden. Liefert die Auswertung der durch die Antwortsignale übermittelten Information ein positives Ergebnis, so muß wegen der Täuschsicherheit der mit einem ECCM-Verfahren übertragenen Antwortsignale angenommen werden, daß die abgefragte Station die Antwortgabe durchgeführt hat und sie somit als Freund einzustufen ist. In diesem Falle erscheint in der Abfragestation die Anzeige "Freund" A3. Mit dem Löschen der Anzeige "Freund" verschwindet auch die Anzeige "Durchführung Identifikation". Die Einrichtung ist dann wieder bereit zur Durchführung eines neuen Identifikations-Vorganges.

Wie oben beschrieben schaltet das Steuergerät G nach Ende der Aussendung der Abfragesignale das Funkgerät des Abfragers von Senden auf Empfang um. Um eine mögliche Antwortsendung des abgefragten Objektes empfangen zu können, versucht der Empfänger des Abfragers, vereinbarte Antwortsignale zu entdecken und auszuwerten. Bleibt dieser Versuch nach einer bestimmten Zeitspanne erfolglos, so erscheint die Anzeige "Feind" A2 im Anzeigegerät A. Da die Zielentfernung des als feindlich identifizierten Objektes durch den Laser-Entfernungsmesser gleichzeitig zur Verfügung steht, kann ein solches Ziel sofort bekämpft werden.

Für die Beleuchtung eines eigenen, mit einem IFF-System ausgestatteten Waffensystems durch die Laserquelle eines feindlichen Waffensystems ergibt sich folgender Ablauf.

Der Laser-Warnempfänger LE entdeckt die Anstrahlung mit Laserlicht und registriert sie durch die Anzeige "Laseranstrahlung" A4. Er ist in der Lage, die Richtung, aus der Laserlicht empfangen wurde, anzugeben. Beim alleinigen Empfang von Laserlicht im Laserwarnempfänger LE besteht im allgemeinen noch nicht die Möglichkeit der sicheren und eindeutigen Identifizierung des Senders. Daher wird der Laserwarnempfänger bei Empfang von Laserlicht sofort den Empfänger des Funkgerätes aktivieren, um eine mögliche Abfragesendung empfangen und auswerten zu können. Im Falle der Beleuchtung eines eigenen Objektes durch den Laser-Entfernungsmesser eines feindlichen Objektes ist der Empfang eines Abfragesignals nicht festellbar.

Dieses Ergebnis steht nach einer bestimmten Zeitspanne nach dem festgestellten Empfang von Laserlicht durch den Laserwarnempfänger zur Verfügung. Aufgrund des fehlenden Abfragesignals kann lediglich die Aussage getroffen werden, daß die Beleuchtung mit Laserlicht durch ein noch nicht identifiziertes Objekt erfolgte A1. Durch die Richtungsangabe des Laserwarnempfängers läßt sich das Zielobjekt ohne zeitaufwendigen Suchvorgang entdecken. Es kann nun zur Bestätigung, daß es sich tatsächlich um ein feindliches Objekt handelt, ein Identifikations-Vorgang wie schon zuvor beschrieben, ausgelöst werden.

Das Prinzip des vorgeschlagenen IFF-Systems muß auch dann eindeutige Identifikations-Entscheidungen liefern, wenn mehrere identifizierende und zu identifizierende Objekte in einem engeren geographischen Bereich operieren. Bei den identifizierenden Objekten handelt es sich um eigene Objekte . Bei den zu identifizierenden Objekten können sowohl eigene als auch feindliche Objekte in Frage kommen.

Zur eindeutigen Freund/Feind-Unterscheidung werden bei der neuen Einrichtung zeitlich kurz nach dem Laserimpuls elektronische Abfragesignale vom Abfrager ausgesendet. Diese elektronischen Abfragesignale werden störresistent und täuschsicher auf dem Funkwege übertragen. Da sie jedoch über Antennen mit Rundstrahl-Charakteristik vom Abfrager abgestrahlt werden, gelangen sie zu jeder in Funkreichweite liegenden Empfangsstation. Durch den engen Richtwinkel des Laserstrahls in Abfragerichtung wird jedoch eine räumliche Selektivität erreicht, die jeweils nur ein individuell zu identifizierendes Objekt erfaßt. Daher ist im Abfrager eine Kopplung von Laser-Entfernungsmesser und Funkgerät durch das Steuergerät G vorgenommen, um den Mangel an räumlicher Selektivität der verwendeten Funkantenne für das vorgeschlagene Verfahren auszugleichen.

Im Antworter ist eine Kopplung von Laser-Warnempfänger und Funkgerät vorgenommen. Dadurch ist es möglich, bei Empfang von Laserlicht das Funkgerät unabhängig von seinem momentanen Betriebszustand in einen Zustand zu steuern, in dem es eine eventuelle Abfragesendung in der dafür vorgesehenen Betriebsart empfangen und auswerten kann. Damit antwortet aufgrund der Richtungsselektivität des Laserstrahls nur das von ihm erfaßte einzelne Objekt, vorausgesetzt, es ist ein Freund.

Die Antwortsignale werden von der durch den Laserstrahl erfaßten Station wegen der Verwendung der vorhandenen Antenne ebenfalls rundum abgestrahlt. Obgleich diese Abstrahlung nicht richtungsorientiert erfolgt, kann die Antwortsendung aufgrund des vorgesehenen Übertragungsverfahrens nur von der den Identifizierungsvorgang auslösenden Abfragestation empfangen und ausgewertet werden. Alle anderen in Funkreichweite liegenden Objekte, bei denen die Antwortsendung auch eintrifft, sind nicht auf den Empfang der Antwortsignale vorbereitet, d. h. nicht in dem dafür bestimmten Betriebszustand. Sie sind für diese Antwortsignale gewissermaßen "taub". Damit ist bei Anwesenheit mehrerer identifizierender und zu identifizierender Objekte dennoch eine zielgerichtete Abfrage eines Objektes möglich und die Antwortsendung des abgefragten Objekts ist nur durch die den Identifikationsvorgang auslösende Abfragestation auswertbar.

Die zuvor beschriebene Situation geht davon aus, daß die durch die einzelnen Abfragestationen durchgeführten Identifikations-Vorgänge zeitlich entkoppelt sind. Mit zunehmender Anzahl identifizierender Abfrager und antwortender Objekte besteht jedoch die Möglichkeit, daß sich die Identifikationsvorgänge einzelner Abfrager zeitlich überlappen, d.h. ein identifizierendes Objekt bzw. ein zu identifizierendes Objekt wird während des Identifikationsvorganges durch ein anderes identifizierendes Objekt abgefragt oder durch ein feindliches Waffensystem mit Laserlicht beleuchtet. Diese Situationen dürfen für ein eigenes Waffensystem nicht kritisch sein. Das oben dargestellte Grundkonzept sieht bisher nicht vor, daß während eines ausgelösten und teilweise schon abgewickelten Identifikationsvorganges ein identifizierendes oder zu identifizierendes Objekt (eigene Waffensysteme) durch ein anderes Objekt zusätzlich abgefragt werden kann. Dies führt dazu, daß zwar der Empfang eines Laserimpulses registriert und angezeigt wird, aber ein mögliches Abfragesignal, das parallel zum Laserimpuls übertragen wird, durch den Empfänger des Funkgerätes nicht empfangbar ist.

Zur Lösung dieses Problems ist ein zusätzliches Funkgerät in jeder IFF-Einrichtung erforderlich. Mit ihm gelingt es, die während eines schon stattfindenen Identifikationsvorganges von einem anderen Objekt eintreffende Abfragesignale zu empfangen und auszuwerten, ohne daß eine Unterbrechung im Ablauf des momentanen Identifikationsvorganges sowohl im identifizierenden als auch im zu identifizierenden Objekt erforderlich ist. Der Vorteil dieser Methode liegt darin, daß die Sicherheit der Identifikations-Entscheidung nicht berührt wird und eine optimale Reaktionszeit zu erzielen ist. Der Preis dafür ist ein zusätzliches Funkgerät.

Es zeigt sich, daß mit dem erweiterten Grundkonzept die Durchführung eines Identifikationsvorganges nicht zum eigenen Risiko wird.

## Patentansprüche

1. Einrichtung zur Freund-Feind-Identifikation (IFF) für Fahrzeuge
- mit einem nicht IFF-fähigen Laserentferungsmesser (LS) zur Erfassung von Objekten,
- einem Funksende/empfangsgerät (F), das zusätzlich zur Nachrichtenübertragung zum Senden, Empfangen und Auswerten von IFF-Funksignalen eingerichtet ist, und
- einem Laser-Warnempfänger (LE)
bei der das Funksende/empfangsgerät (F)
- nach Erfassung eines Objekts durch den eigenen Laserentfernungsmesser (LS) ein IFF-Funkabfragesignal aussendet und danach eine vorgegebene erste Zeitspanne auf ein zugeordnetes IFF-Funkantwortsignal wartet, wobei durch das Eintreffen eines erkennbaren IFF-Funkantwortsignals dieses Objekt als Freund identifiziert ist, und
- nach Erkennung einer fremden optischen Anstrahlung, z.B. durch den Laserentfernungsmesser eines fremden Fahrzeuges, mittels des eigenen Laser-Warnempfängers (LE) eine vorgegebene zweite Zeitspanne auf den Empfang eines zugeordneten IFF-Funkabfragesignals wartet und für den Fall, daß innerhalb der zweiten Zeitspanne ein erkennbares zugeordnetes IFF-Funkabfragesignal eintrifft, innerhalb einer vorgegebenen dritten Zeitspanne dann ein zugeordnetes IFF-Funkantwortsignal ausstrahlt.

2. Einrichtung nach Anspruch 1, dadurch gekennzeichnet, daß das Funksende/empfangsgerät (F) ein VHF Funksende/empfangsgerät ist.

3. Einrichtung nach Anspruch 1 oder 2, dadurch gekennzeichnet, daß zumindest die Übertragung der IFF-Funkabfrage-und -antwortsignale mit einem ECCM-Verfahren erfolgt.

## Claims

1. An identification friend from foe (IFF) apparatus for vehicles, comprising
- a laser range finder (LS) for target acquisition which has no IFF capability,
- a radio transceiver (F) designed, besides for communication, to transmit, receive, and evaluate IFF radio signals, and
- a laser warning receiver (LE),
wherein the radio transceiver (F)
- after acquisition of a target by the laser range finder (LS), sends out an IFF radio interrogation signal and then waits for an associated IFF radio reply signal for a predetermined first period of time, said target being identified as a friend by the arrival of a recognizable IFF radio reply signal, and
- after detection of an unfriendly optical illumination, e.g., from the laser range finder of an unfriendly vehicle, by means of the laser warning receiver (LE), waits for the reception of an associated IFF radio interrogation signal for a predetermined second period of time and, if a recognizable associated IFF radio interrogation signal arrives within the second period of time, then transmits an associated IFF radio reply signal within a predetermined third period of time.

2. An apparatus as claimed in claim 1, characterized in that the radio transceiver (F) is a VHF transceiver.

3. An apparatus as claimed in any one of the preceding claims, characterized in that at least the transmission of the radio interrogation and reply signals is effected using an ECCM technique.

## Revendications

1. Dispositif d'identification ami-ennemi (IFF) pour véhicules
- comportant un télémètre (LS), qui ne peut pas assurer une identification IFF, pour saisir des objets,
- comportant un appareil radio émetteur/récepteur (F) qui, en plus de la transmission d'une information, est agencé pour émettre, recevoir et traiter des signaux radio IFF, et
- ainsi qu'un récepteur d'alerte laser (LE)
dispositif dans le cas duquel l'appareil radio émetteur/récepteur F
- après saisie d'un objet par le propre télémètre laser (LS), émet un signal d'interogation radio IFF puis attend, pendant un premier intervalle de temps prescrit, un signal radio IFF correspondant en réponse, étant précisé qu'à l'arrivée d'un signal radio IFF en réponse, reconnaissable, cet objet est identifié comme ami et
- après reconnaissance d'une émission optique ennemie, par exemple par le télémètre laser d'un appareil ennemi, au moyen du propre récepteur d'alerte laser (LE), l'appareil radio émetteur/récepteur attend pendant un deuxième intervalle de temps prescrit la réception d'un signal radio d'interrogation IFF correspondant et, dans le cas où, pendant ce second intervalle de temps, arrive un signal radio d'interrogation IFF correspondant reconnaissable, un signal radio en réponse IFF correspondant est émis pendant la durée d'un troisième intervalle de temps prescrit.

2. Dispositif selon la revendicaiton 1, caractérisé par le fait que l'appareil radio émetteur/récepteur (F) est un appareil radio émetteur/récepteur à très haute fréquence (VHF).

3. Dispositif selon la revendication 1 ou 2, caractérisé par le fait qu'au moins la transmission des signaux radio IFF d'interrogation et en réponse se fait avec un procédé de contre-mesure électronique (ECCM).
